(19) Europäisches Patentamt
European Patent Office
Office européen des brevets

(11) **EP 4 040 135 B1**

(12) **EUROPEAN PATENT SPECIFICATION**

(45) Date of publication and mention
of the grant of the patent:
**09.04.2025 Bulletin 2025/15**

(21) Application number: **21156097.4**

(22) Date of filing: **09.02.2021**

(51) International Patent Classification (IPC):
**G01M 13/00** (2019.01)

(52) Cooperative Patent Classification (CPC):
**G01M 13/028; G01H 1/003**

(54) **DIAGNOSTIC DEVICE AND METHOD FOR DETECTING A STATE OF A ROTATING MACHINE**

DIAGNOSEVORRICHTUNG UND VERFAHREN ZUR ERKENNUNG EINES ZUSTANDS EINER ROTIERENDEN MASCHINE

DISPOSITIF ET PROCÉDÉ DE DIAGNOSTIC POUR DÉTECTER UN ÉTAT D'UNE MACHINE ROTATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.08.2022 Bulletin 2022/32**

(73) Proprietor: **Hitachi High-Tech Europe GmbH 47807 Krefeld (DE)**

(72) Inventors:
• **Kato, Tetsuji**
**London, EC2Y (GB)**
• **Miyamoto, Hiroki**
**Maidenhead, SL6 8YA (GB)**
• **Ellis, Robert**
**London, EC2Y (GB)**
• **Yamashita, Tomoaki**
**London, EC2Y (GB)**

(74) Representative: **MERH-IP Matias Erny Reichl Hoffmann**
**Patentanwälte PartG mbB**
**Paul-Heyse-Straße 29**
**80336 München (DE)**

(56) References cited:
**US-A1- 2002 083 773      US-A1- 2018 335 366**

## Description

The present disclosure relates to a diagnostic device for detecting a state of a rotating machine, a computer-implemented diagnostic method and a computer program product. Technical advantages relate, in particular, to the improvement of a failure detection of machines. The machines are preferably rotary machines which may be applied in various technical fields, such as railway applications, elevators, automotive vehicles, wind turbines and the like. More specifically, one of the technical benefits of the herein disclosed subjectmatter relates to enabling a more accurate diagnosis of machines which are operated at a variable operational speed.

## Background

When equipment breaks down, unplanned outages including related equipment occur. In addition, since it takes time to arrange an alternative machine or for the repair of the machine, there is an increasing need to detect signs of equipment failure during normal operation. Further, the feedback of diagnosis results can be valuable for the planning of maintenance.

A waveform based on vibration and/or current signals can be used for the diagnosis of rotating machines. For such a diagnosis, a rotational machine is brought into state at constant rotational speed. The advantage related to the use of vibration and/or current signals is that no rotary sensor is needed which would be an additional component of the machine increasing complexity, costs and space requirements of the machine.

In case a Fourier transformation, such as the Fast-Fourier-Transformation (FFT), is applied to equidistant sampling rates of a signal determined from a rotational machine, frequency characteristics that are periodic in time can be calculated. Order components occur n times per revolution of the rotational machine and are periodic to the rotational angle. Signals acquired via a rotation angle are even-angle signals.

In case noise or vibration measurement values with angular synchronism are acquired, an FFT can be used to calculate order components that occur periodically in the rotational angle. Specifically, the FFT is applied to the measurement signal to return a frequency spectrum. The frequency spectrum can be transformed into an order spectrum based on a specific frequency. The frequency spectrum or the order spectrum can be used for diagnosis of the machine.

However, there are technical applications such as trains, automotive vehicles, wind turbines, and the like which do not allow/which do not have extended (if at all) periods during which a rotational machine is operated at constant (rotational) speed. Rather to the contrary, most of the machines are driven at a variable/varying operational speed. Thus, an amount of data that can be used for diagnosis is relatively low and this impairs diagnosis or at least reduces the accuracy thereof. For example, US 2018/335366 A1 shows a method which includes obtaining a first signal from a generator of a wind turbine and a second signal from a vibration sensor coupled to the wind turbine, the first signal representing an output current of the generator, and the second signal being a timesampled signal representing vibrations of a bearing in the wind turbine. Determining a shaft rotation frequency signal from the first signal, the shaft rotation frequency signal representing a time-varying rotational speed of a shaft of the wind turbine. Resampling an envelope of the second signal based on the shaft rotation frequency signal to provide a third signal, the third signal being an angular sampled signal. Detecting, by the at least one processor, a fault in the bearing of the wind turbine by identifying a characteristic signature of a bearing fault in the third signal.

## Problem and Solution

It is an object of the herein described disclosure to provide a solution to the problem of enabling to increase the accuracy of a diagnosis and/or prediction of a state of a machine. In particular, this is achieved by a resampling of a data signal which was measured at various (rotational) speeds of the machine. More specifically, the proposed solution allows to generate a resampled signal based on which an accurate diagnosis can be performed. The resampled signal may be generated to be at least very similar to a signal which has been sampled under a constant speed condition.

The problems identified above are solved by the features of the independent claims.

The following aspects are provided in particular: According to an aspect, there is provided a diagnostic device in accordance with claim for a machine that is operated under various (rotational) speeds or non-constant (rotational) speed conditions. Preferably, the diagnostic device is furthermore enabled to detect a state of said machine.

The diagnostic device comprises a measurement unit and a control unit, wherein the measurement unit is configured to determine or sample or measure a signal having a frequency that changes with respect to the rotational speed of the rotating machine. Preferably, the measurement unit may be/include one or more non-rotary sensor(s).

The control unit is configured to analyze the signal determined/sampled/measured by the measurement unit. Here, analyzing the (sampled/measurement) signal does comprise dividing the signal into a plurality of windows, extracting a resampling indicator from the signal for each window, wherein the resampling indicator is a ratio of a plurality of frequencies in the signal, resampling the signal for each window by multiplying a number of original data points for each window by the resampling indicator, and generating a resampled overall signal by joining the resampled signals of each window.

In a preferred aspect, the control unit may further be configured to compare the resampled overall signal with a reference signal and to output a failure report in case the resampled overall signal differs from the reference signal.

In the context of the present disclosure, a machine diagnosed by the diagnostic device preferably may be a rotational/rotating/rotary machine, which shall preferably include mechanical equipment which (or parts thereof) performs a rotary motion, such a motor, a generator or the like. An example for a preferred application may be a rotational machine, such as a motor of a train, a motor of an automotive vehicle, a motor of an elevator or the like. The motors are very preferably electric motors which is however not necessary.

A state of the (rotational) machine may be an operation under normal conditions or an operation under failure conditions, such as mechanical and/or electrical damage. A failure condition may not necessarily influence a function of the rotating machine at present but may cause a break down in the future.

In the context of the present disclosure, the measurement unit or sensor may be indicated as a "non-rotary sensor". This shall indicate that the preferred sensor or sensors of the present disclosure is configured to measure/sample/determine a behavior of a rotational machine that is not a rotation of a part of the rotational machine as such.

In other words, the sensor(s) may preferably measure a parameter which is not the rotational speed of the machine itself. The advantage of such a non-rotary sensor is that additional components are not needed, such as a rotary sensor. Instead, e.g., a current sensor or the like can be used. For example, each inverter driving the motor, e.g. of an automotive vehicle, a train or the like, has a sensor or equivalent unit included or attached to it which allows measuring the electric current over time. In even other words, the sensor or the measuring unit used in the context of the present disclosure may be configured to measure parameters that change with respect to a state and/or a behavior of a rotational machine, such as an electric current driving the rotational machine and/or a vibration of the rotational machine.

In the context of the present disclosure, a harmonic or harmonic component of a signal, which may have a wave-like form, may include a harmonic component of a fundamental component that is generated by a rotating machine to be diagnosed.

According to an example, the non-rotary sensor used in the diagnostic device described herein may be configured to determine a signal of a behavior of the rotational machine with a sampling rate that changes relative to a rotational speed at which the rotational machine is operating.

In order to generate a signal with a constant sampling rate, which enables a comparison of data measured under conditions at various speeds, the diagnosis device described herein does comprise a control unit that may be configured to divide a signal acquired by a measurement unit into a plurality of windows and to extract a resampling indicator from the signal for each window. With regard to the term "divide into windows" it is preferably included the practice of applying a window function onto the measured signal. Also, the dividing into windows may indicate that the signal is separated into sub-sections which have a constant or varying length along the X-axis.

For example, if the signal determined by the measurement unit measure has the electrical current or vibrations plotted on the Y-axis and the time on the X-axis, the division into a plurality of windows may mean that the signal is divided into sub-sections of a specific length in the X-direction/time. Instead of the term "length" the terms "size" or "width" of a window may be used, too.

Preferably, a part of a sampled signal to be analyzed, e.g., from the start at t = 0 to the end of the recording at t = end, either may be divided into a predefined number of sub-sections/windows each having an equal or different lengths (depending on the length, i.e. time duration, of the signal section to be analyzed and on the number of sub-sections), or windows of a predefined constant length (in the X-direction, time duration) are applied to the signal. Alternatively, the number of windows or the length of each window may be chosen by a user. Further, the part of a signal to be analyzed does not need to be the entire signal from t = 0 to t = end; instead a sub-part of the sampled signal may be analyzed and a user may be asked to make a selection or the selection may be automated based on predefined requirements. Further, the windows may be arranged to overlap each other or may be arranged sequentially.

In other words, the signal which is divided into windows by the control unit may be a complete signal or a sub-part of a signal provided by the measurement unit. The term "complete signal" shall indicate that all data points measured/sampled from a start time of the sampling to an end time of the sampling are used, while a sub-part of the signal may describe a time period shorter than the entire time between the start and the end of the sampling. Further details will be described with regard to preferred aspects below.

Moreover, the sampled signal or, more specifically, each sub-section of the sampled signal of each window may be converted into its frequency components, i.e. frequency spectra are generated/determined. A preferred method for this operation includes the Fourier transformation and especially FFT. In this regard it is noted that each part/component of the machine to be analyzed/diagnosed may return a characteristic frequency peak in the frequency spectrum having the frequency on the x-axis. Further, each failure or the like may return a frequency peak and the amplitude thereof may be used as an indicator for the severity of a possible damage/failure.

According to an example, the resampling indicator according to the diagnosis device described herein may indicate a shift of a ratio, e.g., a relation between a plurality of frequencies/frequency peaks in a signal acquired by the measurement unit or in the FFT-transformed signal, which is caused by a change in the sampling rate under various rotational speeds.

For compensation of effects caused by changing sampling rates caused by different operational speeds of the machine, the control unit of the diagnosis device described herein is configured to resample the signal by multiplying a number of original data points by the resampling indicator. Thus, a data length of measured data can be standardized by the resampling indicator for each window and, accordingly, for an overall signal of the combined data of each window. The resampling indicator is calculated based on a ratio of a frequency of an N-th harmonic in a particular window and a maximum frequency of the N-th harmonic in all windows, for example.

According to a preferred aspect, the following formula (1) may be used for the calculation of a resampled signal for a particular window, wherein "Pm" is a number of resampled data points for the particular window, "x" may be a resampling indicator and PO is a number of original data points of the particular window.

$$Pm = x * PO \qquad (1)$$

The subject-matter described above allows to improve the accuracy of failure detection and/or prediction even for machines which do not operate under constant speed conditions. An additional or specific rotational sensor, which would increase costs, complexity and machine size, is not necessary and the measurement unit can be an integral part of the machine to be supervised. And, the preferred aspect that the control unit is further configured to compare the resampled signal (or its frequency or order spectrum) with a reference signal allows to detect and output failure states. Otherwise, if the control unit of the diagnostic device does not have said configuration for performing a comparison, the resampled signal may be output by the diagnostic device and the resampled signal may be used in a different way or may be stored for later failure diagnosis or the like.

Further, the measurement unit is a current sensor. The current sensor, preferably, is a component of the machine to be diagnosed so that the sensor does not need to be provided as an additional component. The resampling indicator is a ratio of a maximum frequency of a predetermined N-th harmonic in every window of a signal to be analyzed from the measurement unit and a frequency of the predetermined harmonic in a particular window of the signal provided by the measurement unit.

Further preferably, it is noted that the value of N for the N-th harmonic may be predefined, it may be selected by a user and/or a trained artificial intelligence (AI) may select it. More preferably, a start value of N may be selected by a user, an AI or may be predefined, for example any harmonic between the 3rd and the 10th, and the final value for N may be determined by iteration. For example, the noise level may be used as an indicator for said iteration, which may mean that the final N value is found when a minimum noise or a noise level below a threshold is reached in the FFT-transformed spectrum. Even more preferably, it may be predefined that the target frequency should be about 2-times or higher than the noise level.

Using a specific harmonic for the determination of the resampling indicator allows to achieve a high accuracy of the resampling and thus returns a high accuracy of the failure analysis. If a trained AI is used for the selection of the best-possible harmonic and even more preferably also for the division into windows, a fully automated and very accurate resampling can be performed without increasing computational costs too much. In this case, a user interaction is not necessary.

In case the measurement unit is a current sensor, the following formula (2) may be used for calculation of a resampled signal, wherein "Pm" is a number of resampled points, "am" is the N-th harmonics frequency in a particular window, "A "is the maximum N-th harmonics frequency over all windows and "PO" is a number of original data points of the particular window. Thus, the ratio of "am" and "A" serves as a resampling indicator.

$$Pm = (am/A) * PO \qquad (2)$$

Hence, with the given hardware of the machine to be analyzed and a non-complex operation of the control unit it is possible to improve the accuracy of the failure detection and/or prediction. Again, the N-th harmonic may be chosen by signal to noise ratio of a spectrum of a signal. Thus, the N-th harmonic is the harmonic component that shows the best signal to noise ratio of all harmonics. According to an example, the N-th harmonic may be chosen as the 5th harmonic component or lower or higher; very preferably between the 2nd and the 10th. Using the noise level as a selection criterion allows to find a very accurate solution without too much increase of complexity of the operation.

According to another aspect, the non-rotary sensor is a vibration sensor and the resampling indicator is a ratio of a maximum frequency value of a predetermined frequency component over all windows and a frequency value of the predetermined frequency component in a particular window.

In case the non-rotary sensor is a vibration sensor, the following formula (3) may be used for calculation of a resampled signal, wherein "Pm" is a number of resampled points for a particular window, "Z" is a maximum frequency of a chosen frequency component for all windows, "Y "is frequency of the chosen frequency component in the particular window, and P0 is a number of original data points in the particular window. Thus, the ratio of "Y" and "Z" serves as a resampling indicator.

$$Pm=(Y/Z)*PO \qquad (3)$$

According to another preferred aspect, the predetermined frequency component may include a frequency component of a gear mesh coupled to the rotating machine or the like. In other words, the predetermined frequency component may include any frequency component which is well above the (operation, characteristic) frequency of the component to be analyzed. For example, if the motor has a characteristic frequency of 80 Hz and if the motor shall be analyzed, a frequency component of any other component/part which has a structurally higher characteristic frequency may be used for determining the resampling indicator. The gear mesh is only one of a plurality of options because the gear mesh usually has a characteristic frequency which may be clearly higher than the exemplary 80 Hz. Preferably, the frequency which is used for the resampling indicator determination should be at least 2-times the base frequency (operational frequency) of the component to be analyzed.

By using a known frequency that is independent from frequencies generated by a rotational machine, such as a high frequency generated by a gear mesh connected to the rotational machine, for calculating the resampling indicator, the data generated by the rotational machine itself is not corrupted by the resampling process. Further, for such an operation it is not even necessary to determine the harmonics.

According to another preferred aspect, the predetermined frequency component excludes an operating frequency of the rotating machine. In case the operating frequencies of a rotational machine are known, the predetermined frequency component may be chosen as being higher or lower than the operating frequencies. As noise, such as frequencies generated by mechanical elements in an environment of the rotational machine is likely to occur in frequencies lower than the operating frequencies, frequencies higher than the predetermined frequencies may be chosen as the predetermined frequency component, for example.

According to another preferred aspect, a size (or width or length in the x-axis direction) of a particular window of the plurality of windows may be a time that is predetermined or that is adapted dynamically with respect to a rotational speed of the rotating machine.

As the resampling indicator according to the diagnosis device described herein is frequency dependent, the size of particular windows to be analyzed as data to be analyzed may be constant or may vary over time or for each window. In other words, the resampling indicator is time-independent, such that even small windows that provide for data measured under very high rotational conditions can be analyzed.

Further, the window size/length of a sub-section divided by a window may be adapted such that at a lower frequency the window width/size may be shorter and for a high frequency the window may be set wider/greater size. This improves to increase the accuracy of the resampling.

The width of the window can also be adapted automatically by starting with a predefined value for each of the windows, either being equal for each window or a different start width is preset for each window, and an trained machine learning unit or a trained AI may adapt the window size(s)/width(s) such as to receive an optimized output. The optimized output may be determined, e.g. based on the noise level in the resampled signal or its frequency spectrum or the like. Other computerized means may also be used for the window size adaption. The automated adaption of the window size is helpful to fully automate the operation of the diagnosis device and to improve processing speed and accuracy of the output.

According to another preferred aspect, the diagnostic device may have a control unit configured to interpolate or extrapolate data points at an edge of a window or between two windows. A data point may be one sampled value which is one value of the sampled signal. In other words, a data point may refer to one measurement value at a specific point in time. An edge of a window shall be understood as an end part of the window in the x-direction. For example, if the window has a length of 10s and if the window includes one data point for each second, the first and the tenth data point may be considered to be located at the edge of the window. In another example, additional data points may be considered to be arranged at the edge of the window, e.g. all data points which are within the first/last 10% or less of the window size/width. Furthermore, the windows may be arranged to overlap each other, to be perfectly sequential or a small gap may be between the windows, e.g. of very few data points. Data points in said possible gap may be considered to between windows as well as data points which are in an overlapping area of two windows. The interpolation or extrapolation can be performed by usual mathematical means realized by way of a computerized/-programmed unit or the like in the control unit. Also for such an operation a trained machine learning unit or AI may be used. The interpolation or extrapolation of data points may prevent that data points are cut/lost due to the division of the signal in different windows and hence prevents inaccuracies in the resampled signal due to loss of data points.

Alternatively or additionally, each window may be divided into further sub-windows or the size of the windows may be chosen to be relatively small/may be reduced to increase the "resolution" for the further resampling process/operation described above.

According to another preferred aspect, the resampled overall signal may be compared with a reference signal by an amplitude value of at least one order component calculated from the resampled overall signal, i.e. order spectra may be used for the comparison. The order spectrum of the resampled signal may be generated by transformation of the frequency spectrum via an order analysis to plot the orders on the x-axis. The order analysis may, e.g., be performed in a known manner, for example, by transforming the frequency spectrum based on a chosen frequency into an order spectrum that has the orders plotted on the x-axis. The order spectrum may include additional peaks when the machine has a failure compared to the order spectrum of a machine which has no failure. These peaks can be detected with low effort and thus computational costs are decreased.

Alternatively or additionally, the resampled signal may be transformed by FFT and a failure may be detected as a peak in the frequency spectrum which is not present in a spectrum of a normally working machine.

Summarizing, a failure state may, for example, be characterized by one or more additional peaks in the frequency or order spectrum. A reference signal may be a frequency spectrum or an order spectrum of an unbroken machine/a machine which does not have any technical failures.

The detection of failures by comparing frequency or order spectra with a respective spectrum of a normally working machine can be carried out quickly and reliably so that the failure diagnosis becomes reliable and has improved accuracy. As noted above, the computational costs for such a comparison are relatively low.

According to another preferred aspect, the resampled overall signal (or the order or frequency spectrum thereof) may be compared with a reference signal by using a trained machine learning algorithm or a trained AI. Also, it is possible to compare the frequency or order spectrum with a respective spectrum of a normally working machine as explained above.

In other words, for detecting a state, in particular a failure state or a regular state of a particular rotational machine, a resampled signal or, preferably, a spectrum derived therefrom provided by the diagnosis device described herein may be input into a trained machine learning algorithm, such as an artificial neural network, a support vector machine, or the like.

The trained machine learning algorithm may be trained based upon training data, i.e. a so-called "ground truth" that has been labelled as belonging to a particular state, by a human expert, for example.

The trained machine learning algorithm may be trained to assign resampled data to a state "normal" or to a state "failure". Thus, the control unit according to the diagnosis device described herein may be configured to output a signal, i.e. a report, indicating a state "normal" or a state "failure", according to an output of the machine learning algorithm. For outputting a particular state, an output device, such as a display and/or a speaker may be used.

The use of a trained machine learning algorithm or unit, or of a trained AI further helps to improve to output results, even in case of complex/big sets of data, quickly, automated and reliably.

According to another preferred aspect, the ratio of the plurality of frequencies in the signal is calculated by dividing, multiplying, subtracting and/or adding particular frequencies of the plurality of frequencies.

For calculating a ratio of a plurality of frequencies in order to obtain a resampling indicator, every mathematical meaningful calculation can be used. In particular, two predetermined or selected frequencies or respective mean values of frequency bands, may be divided through each other, for example.

According to another preferred aspect, the rotating machine may be an electric machine selected from the following non-exhaustive list of electric machines: generator of a wind turbine, motor of a vehicle, motor of a car, motor of a train, and the like.

The diagnostic device described herein may be used for every rotational machine, in particular electrical machines, such as generators or motors, respectively.

According to a further aspect, there is provided a computer-implemented diagnostic method in accordance with claim 12 for detecting a state of a rotating machine that is operated under various rotational speeds.

According to a further aspect, there is provided a computer program product in accordance with claim 13 having computer program logic arranged to put into effect the method for detecting a state of a rotating machine that is operated under various rotational speeds according to an embodiment, when being executed by a computer system, such as the control unit of the diagnosis device described herein.

Summarizing, an improved diagnosis can be provided even if machines are operated under non-constant speed conditions.

## Brief Description of Drawings

Fig. 1　shows an example of a measurement signal in Fig. 1(a) and a frequency spectrum determined by a Fast Fourier transformation (FFT) in Fig. 1(b).

Fig. 2　includes Figs. 2(a) and 2(b) which show a frequency spectrum determined by a Fourier transformation of a measurement signal as well as an order spectrum determined by a diagnosis device as described herein.

Fig. 3　shows a diagnosis device as described herein.

Fig. 4　depicts some steps of a resampling process as described herein.

Fig. 5　shows a flow diagram of a process as described herein.

## Detailed Description of Exemplary Embodiments

In the following, preferred aspects and examples will be described in more detail with reference to the accompanying figures. Same or similar features in different drawings and examples are referred to by similar reference numerals. It is to be understood that the detailed description below relating to various preferred aspects and preferred examples are not to be meant as limiting the scope of the present disclosure. The scope is limited by the appended claims.

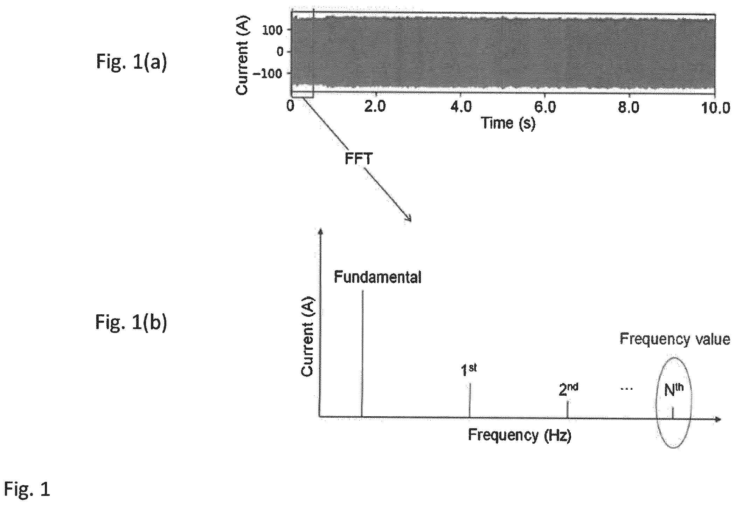

Fig. 1 includes Fig. 1(a) which shows an example of a measurement signal as recorded by a measurement unit (non-rotary sensor) 201. In this specific example, the y-axis shows an electric current amplitude in Ampere while the x-axis indicates the time in seconds. In this specific example, a measurement unit 201 is a current sensor which may, for example, be mounted at the inverter of an electric motor to be diagnosed or at another position of the motor. Fig. 1(b) shows an exemplary and schematic result of a transformation of the measurement signal into its frequency components. The frequency spectrum shown in Fig. 1(b) includes the fundamental frequency and the harmonics up to an N-th harmonic. The spectrum is plotted such as to have the frequency values of the fundamental and the harmonic frequencies on the x-axis in Hertz and the current value on the y-axis in Ampere.

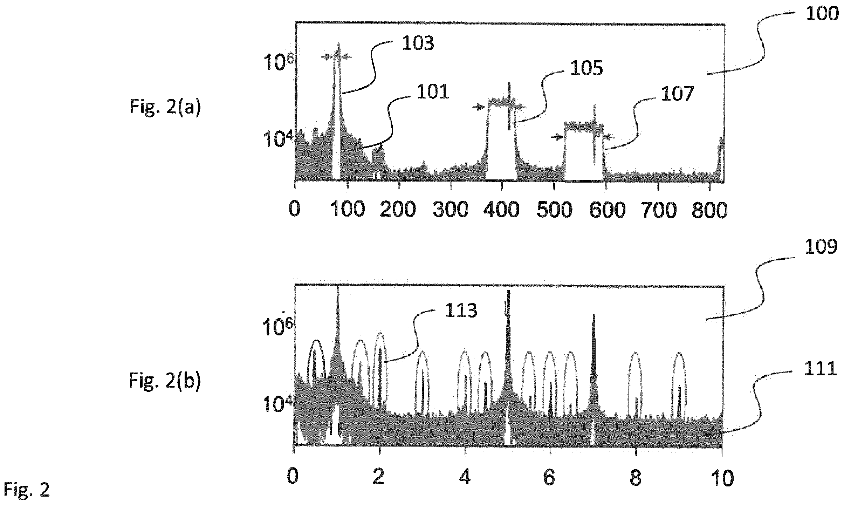

In Fig. 2, a first diagram 100 is shown in the upper part of Fig. 1 which is indicated as Fig. 2(a). Diagram 100 extends over an x-axis representing a frequency in Hertz (Hz) and a y-axis representing a current in Ampere (A). Said diagram 100 shows an FFT transformed measurement signal, i.e. its frequency spectrum, which was not processed in accordance with the present disclosure. It can be seen that the dispersion of the peaks, such as the frequency components indicated by 103, 105 and 107 have a quite high dispersion which renders a failure diagnosis difficult. As can be seen further, the dispersion of the frequency components 103, 105 and 107 increases with increasing frequency. Therefore, an optimum can be found for the selection of a frequency or a harmonic for the determination of a resampling indicator, as described in detail below. The optimum is located between a frequency which is too close to the operational frequency of the machine or a harmonic which is too close to the fundamental frequency, and a frequency or harmonic which is selected to with a too high value. In the latter case the dispersion and thus the noise becomes to high.

Further, in Fig. 2, a second diagram 109 is shown in the lower part which is indicated as Fig. 2(b). Diagram 109 extends over an x-axis representing an order number and a y-axis representing a current in Ampere (A). The diagram 109 shows an order spectrum which has the order of the harmonics plotted on the x-axis. The order spectrum of diagram 109 shows the result of transforming a measurement signal which was resampled in accordance with the herein described teaching into an order spectrum. The data 111 (single data points are not visible) shows clear peaks for the harmonics of orders 1, 5 and 7 which correspond to the peaks 103, 105 and 107 in the frequency spectrum. Further, additional peaks which are indicated by a circle/oval (see reference sign 113 at one of the circles) show "hidden" features which may be used for a failure diagnosis.

For example, a human user or a computer, such as a computer running a trained machine learning unit or a trained artificial intelligence unit, may use the order spectrum for comparison with an order spectrum of a machine which is known to operate normally.

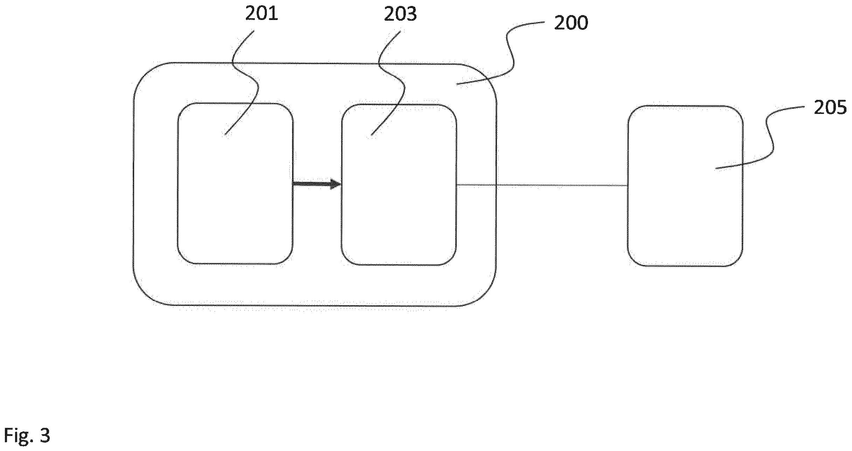

In Fig. 3, a schematic of a diagnosis device 200 is shown. The diagnosis device 200 comprises a non-rotational sensor 201, such as a current sensor or a vibration sensor, for example, and a control unit 203 with a processor and memory, for example. The control unit may be connected to a remote computer or computers for sharing of data or for outsourcing data processing. Further components, such as a transceiver unit, a receiver unit, a sender unit or the like are not shown, however, can be comprised in the diagnosis device 200. For example, if the diagnosis device 200 shall be enabled to exchange wireless communication with a remote computer/server/processor or a network, a respective (wireless) communication unit may be added to the diagnosis device or as an integral part of the control unit. The control unit, further, can be the control unit of the machine to be diagnosed and the additional diagnostic functions may be added by way of a software/computer program product.

The control unit 203 is configured to, at least, acquire a signal from the sensor 201, to divide the signal into a plurality of windows and to extract a resampling indicator from the signal for each window, wherein the resampling indicator is a ratio of a plurality of frequencies in the signal. The signal received from the sensor 201 may be one or more data points or the complete sampled signal to be diagnosed. The sensor 201 may located spatial separate from the control unit 203. For example, the sensor 201 may be arranged at/within or close to the machine to be diagnosed (not shown) and the control unit 201 may be located at control entity which, for example in a vehicle, may be placed at a different position of the vehicle. The signal may be transferred via wired or wireless communication path(s).

Further, the control unit 203 is configured to resample the signal within each window by multiplying a number of original data points within each window by the resampling indicator and to generate a resampled overall signal by joining the resampled signals of each window.

Additionally, the control unit 203 is configured to compare the resampled overall signal with a reference signal and to output a failure report in case the resampled overall signal differs from the reference signal. For outputting the failure report, the control unit 203 may be connected with a screen 205 or any other kind of an output device. The connection may be by wire or wireless. The screen 205 is not mandatory and the result may also be stored or submitted to another computer for further processing.

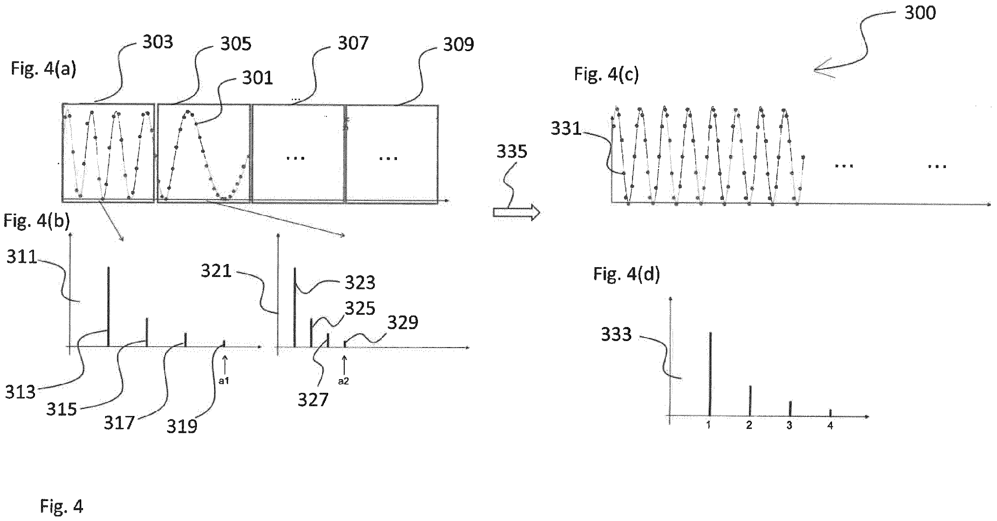

In Fig. 4, a resampling process 300 is shown in detail.

First, as shown in Figure 4(a), a signal 301 is sampled by a non-rotational sensor 201. The signal 301 is plotted on an x-axis showing time in seconds [s] and a y-axis showing an electric current in Ampere [A], see Figure 4(a). The signal is depicted by the black dots which indicate single data points and a connection line between these black dots which are shown for improving the illustration of the signal 301. After the measuring, the signal 301 is cut into a plurality of n-windows 303, 305, 307, and 309, as also shown in Figure 4(a). The setting of the number of the windows and/or of their size/-length/width can be predetermined or can be selected by a user from case to case or can be computerized. In the latter case a trained AI may determine an optimum for the number of windows and the size for each of them iteratively.

As can be seen from Figure 4(b), with respect to window 303, for example, a frequency transformation 311 of the signal 301 in window 303 results in a number of n-harmonics 315, 317 and 319 of a fundamental component 313 at specific frequencies. Here, the fundamental component 313 of the signal 301, may be a basic activity/operation of the rotary machine, for example.

As can be further seen from Figure 4(b), with respect to window 305, for example, a frequency transformation 321 of the signal 301 in window 305 results in a number of n-harmonics 325, 327 and 329 at specific frequencies that differ from the specific frequencies of harmonics 315, 317 and 319. Here, a fundamental component 323 of the signal 301, may be a basic activity of the rotary machine, for example.

In particular, the fourth harmonic 329, marked as "a2" in Figure 4(b), is much closer to the fundamental component 323 than the fourth harmonic 319, marked as "a1" in Figure 4(b), to the fundamental component 313. Assuming for this example that the frequency value of the fourth harmonic 319 of the window 303 is the maximum frequency value of all fourth harmonics over all windows, "a1" may be chosen as a reference point for calculation of a resampling indicator, if in this example the fourth harmonic shall be used for the determination of the resampling indicator. Thus, the resampling indicator is calculated as a ratio of a frequency value of a predetermined harmonic, such as the fourth harmonic 329 in a particular window, such as window 305, i.e. "a2" and the frequency value of the fourth harmonic 319 in window 303, i.e. "a1".

The data of the signal 301 in each window 303, 305, 307, and 309 are resampled according to the following formula (2), as indicated by arrow 335 wherein "Pm" is a number of resampled points in a particular window, "am" is an N-th harmonic frequency in a particular window, "A" is a maximum N-th harmonics frequency over all windows, and "PO" is a number of original data points in a particular window. Thus, the ratio of "am" and "A" serves as a resampling indicator.

$$Pm = (am/A) * PO \qquad (2)$$

Again, in the above example, e.g., the value of the fourth harmonic of the signal of window 303 may be inserted as "A" into equation (2) and the value of the frequencies of the fourth harmonic of all other processes signals of the other windows is used as "am" for each window. However, it is not necessarily the fourth harmonic which is used for determining the resampling indicator. Depending on the signal 301 it was found that the harmonic of 2nd to 10th order may be preferable and the specific order can be found iteratively. For example, the resampling indicator can be determined with a start value of N with N being the order of the harmonic used for the resampling indicator determination. Then, if it is found that the noise of the resulting spectra becomes too high or if the result is otherwise unsatisfying, the value of N+1 or N-1 may be used, and the like until the optimum or the most satisfying result can be achieved. A preferably start value can, e.g., be the 5th or 7th harmonic.

The data calculated by resampling the signal 301 are combined to an overall resampling signal 331 as shown by Figure 4(c), which is compensated with respect to varying sampling rates caused by running the rotational machine under different speed conditions. Thus, the overall resampling signal 331 is shown with respect to an x-axis showing data points and a y-axis showing a consumed current in Ampere (A). This resampled signal 331 enables a very accurate diagnosis of the machine even if the machine does not constantly operate at the same speed.

By analyzing the overall resampling/resampled signal 331 with respect to their orders, i.e. applying a FFT and preferably also an order analysis, a single distribution pattern 333 is calculated, as shown by Fig. 4(d). Distribution pattern 333 is shown with respect to an x-axis showing an order number and a y-axis showing a consumed current in Ampere [A]. Based on the single distribution pattern 333, a diagnosis of the state of the rotational machine can be executed without any influence of the operating speed of the rotational machine. Thus, in case the distribution pattern 333 differs from a predetermined reference pattern in percentage that is higher than a given threshold or includes additional not expected peaks, the rotational machine may be considered to be in a failure state, for example. The order analysis is performed as known, for example, by applying a FFT on the resampled signal 331 and subsequently determining the orders based on a chosen frequency with which the frequency spectrum is transformed into the order spectrum shown in Fig. 4(d). It may also be possible to compare the frequency spectrum to find a possible failure state, i.e. it may not be necessary to perform the order analysis.

According to another alternative not depicted, the resampling indicator may not be determined based on a specific harmonic. Instead, a characteristic frequency of a part of the machine to be diagnosed may be used for determining a resampling indicator. In this case the non-rotary sensor 201 may not be an electric current sensor but a vibration sensor so that the y-axis of the measurement/sampled signal would be the amplitude of the measured vibrations. An FFT of said signal would return the frequency spectrum showing characteristic frequencies/peaks for specific components and/or indicating possible errors/failures. For example, assuming the machine includes a motor and also includes a gear mesh. In a very simplified example, one peak in the frequency spectrum would be present caused by the motor and one would be present caused by the gear mesh. Further in this very simplified example, the gear mesh would have a higher characteristic frequency/operational frequency than the motor, e.g. 600 Hz compared to 80 Hz or the like. Then, the peak of the gear mesh in the frequency spectrum could be used for building the resampling indicator in analogy to the procedure described in connection with Figure 4 and the use of a specific harmonic. The only difference in this procedure is that, instead of the harmonics, the specific frequency of a component being higher than the frequency of the motor, e.g. at least 2-times higher or the like, is used for each window in the frequency value thereof. Said value can be inserted into the equation (3) below.

Please note that "Z" is a maximum frequency value of a chosen frequency component for all windows, "Y "is the frequency of the chosen frequency component in the particular window, and P0 is a number of original data points in the particular window. Thus, the ratio of "Y" and "Z" serves as a resampling indicator.

$$Pm=(Y/Z)*P0 \qquad (3)$$

In other words, the highest frequency value being linked to the gear mesh, in the above example, of the frequency spectra of all windows would be used as Z and for each window the frequency value of the gear mesh peak would be used as Y. For example, if the frequency value of the gear mesh may vary between 590 and 610 Hertz between all windows of the sampled and divided signal, 610 Hertz would be used as Z. The number of data points per window is clearly defined by the width of the window and the sampling rate of said window. Based on the resampling indicator for each window the signals of each window can be adapted by equation (1) above and the entire resampled signal can be generated subsequently.

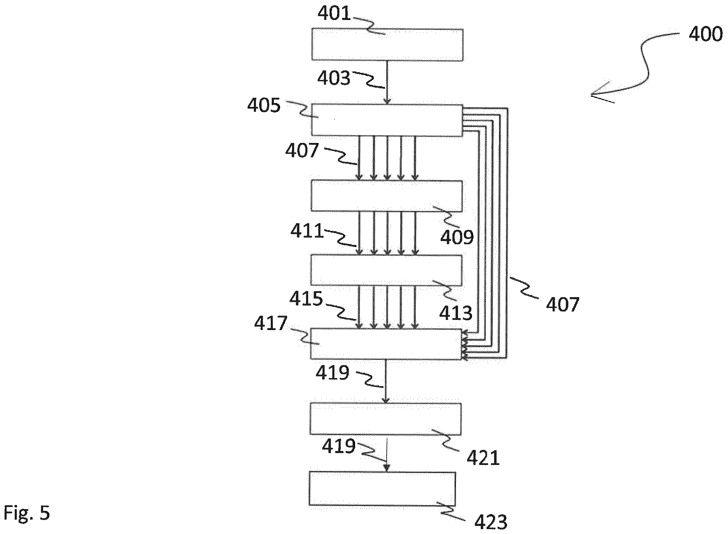

In Fig. 5, a process flow of a computer-implemented diagnostic method 400 for detecting a state of a rotating machine that is operated under various rotational speeds is shown. This process flow also shows the preferred operation of the diagnostic device 200.

The method 400 comprises a determination step 401 for determining a signal 403 having a waveform and frequency that changes with respect to the rotational speed of the rotating machine, a dividing step 405 for dividing the signal 403 into a plurality of windows 407. Furthermore, the window data 407, i.e. the information about how the data signal is divided into windows is directly submitted to the step 417 described below. Subsequently, a frequency analysis step 409 may be performed to receive frequency spectra 411 for each window 407. These frequency spectra 411 or the data signals of each window are then processed in a step 413 in which the harmonics of the frequency component are selected which are used for determining the resampling indicators and the resampled signals of each window 415. Instead of the harmonics, a specific frequency as described in connection with the alternative to Fig. 4 may be selected. Based on this, a generating step 417 for generating a resampled overall signal 419 is performed by joining the resampled signals 415 of each window. Optionally, the method may further comprise a comparison step 421 for comparing the resampled overall signal 419 with a reference signal, and an output step 423 for outputting a failure report in case the resampled overall signal 419 differs from the reference signal. In the present example, which is however not meant to limit the disclosure, five windows are generated and so on are generated. The number of five is arbitrarily picked and can be higher or lower.

Further, instead of comparing the resampled signal 419 directly with another signal a frequency spectrum or order spectrum thereof may be used for the comparison.

The control unit, as mentioned above, may include a computer program product executing the steps as explained in connection with Figures 4 and/or 5 when.

Summarizing, the disclosure allows improving the accuracy of the diagnosis of a machine which operates under varying speeds.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing.

Aspects/Examples of the present disclosure may be a software entirely (including firmware, resident software, micro-code, etc.), or a combination of software and hardware aspects that may be referred to as a "system". Furthermore, the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the disclosure.

It should be noted that terms such as "server" and "processor" may be used herein to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure which is defined by the claims.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms within the scope of the invention defined by the claims, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a highlevel language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

**Claims**

1. A diagnostic device (200) for analyzing a state of a rotating machine that is operated under various rotational speeds,

 wherein the diagnostic device (200) comprises:

 - a measurement unit (201), and
 - a control unit (203),

 wherein the measurement unit (201) is configured to determine a signal (403) having a frequency that changes with respect to the rotational speed of the rotating machine,
 wherein the control unit (203) is configured to analyze the signal (403) determined by the measurement unit (201),
 wherein analyzing the signal (403) comprises:

 - dividing the signal (403) into a plurality of windows (407),
 - extracting a resampling indicator (411) from the signal (403) for each window (407), wherein the measurement unit is a vibration sensor or a current sensor and wherein, in the case in which the measurement unit (201) is a current sensor, the resampling indicator (411) is a ratio of a maximum frequency value of a predetermined N-th harmonic over all windows, and a frequency value of the predetermined N-th harmonic in the particular window (407) or,
 in the case in which the measurement unit (201) is a vibration sensor, the resampling indicator (411) is a ratio of a maximum frequency value of a predetermined frequency component over all windows and a frequency value of the predetermined frequency component in a particular window (407),

 - resampling the signal (403) for each window (407) by multiplying a number of original data points of each window (407) by the resampling indicator (411),
 - generating a resampled overall signal (419) by joining resampled signals (415) of each window.

2. The diagnostic device (200) according to claim 1, wherein the control unit (203) is further configured to compare the resampled overall signal (419) with a reference signal and to output a failure report in case the resampled overall signal (419) differs from the reference signal.

3. The diagnostic device (200) according to claim 1, wherein, in the case in which the measurement unit (201) is a vibration sensor, the predetermined frequency component includes a frequency of a gear mesh coupled to the rotating machine.

4. The diagnostic device (200) according to claim 1, wherein, in the case in which the measurement unit (201) is a vibration sensor, the predetermined frequency component excludes an operating frequency of the rotating machine.

5. The diagnostic device (200) according to at least one of the preceding claims,
 wherein a size of a particular window (407) of the plurality of windows is a time that is predetermined or that is adapted dynamically with respect to a rotational speed of the rotating machine.

6. The diagnostic device (200) according to claim 5, wherein
 the dynamic adaption of the size of a window is performed by a trained machine learning algorithm or a trained artificial intelligence.

7. The diagnostic device (200) according to at least one of the preceding claims,
 wherein the control unit is configured to interpolate or extrapolate data points at an edge of a window or between two windows is interpolated.

8. The diagnostic device (200) according to at least one of the preceding claims,
 wherein the resampled overall signal (419) is compared with a reference signal using a trained machine learning algorithm or a trained artificial intelligence.

9. The diagnostic device (200) according to at least one of the preceding claims,
 wherein an order analysis is applied to the resampled overall signal (419) and the resulting order spectrum is compared with a reference signal.

10. The diagnostic device (200) according to at least one of the preceding claims, wherein the ratio of the plurality of frequencies in the signal (403) is calculated by dividing, multiplying, subtracting and/or adding particular frequencies of the plurality of frequencies.

11. The diagnostic device (200) according to at least one of the preceding claims, wherein the rotating machine is an electric machine selected from the following non-exhaustive list of electric machines: generator of a wind turbine, motor of a vehicle, motor of a car, motor of a train, motor of an elevator, motor of any other industrial apparatus, preferably an electric motor.

12. A computer-implemented diagnostic method (400) for detecting a state of a rotating machine that is operated under various rotational speeds, wherein the method (400) comprises:

a) determining (401), by a measurement unit (201), a signal (403) having a frequency that changes with respect to the rotational speed of the rotating machine,
b) dividing (405) the signal (403) into a plurality of windows (407),
c) extracting a resampling indicator from the signal (403) for each window (407), wherein the measurement unit is a vibration sensor or a current sensor and wherein, in the case in which the measurement unit (201) is a current sensor, the resampling indicator (411) is a ratio of a maximum frequency value of a predetermined N-th harmonic over all windows, and a frequency value of the predetermined N-th harmonic in the particular window (407) or, in the case in which the measurement unit (201) is a vibration sensor, the resampling indicator (411) is a ratio of a maximum frequency value of a predetermined frequency component over all windows and a frequency value of the predetermined frequency component in a particular window (407),
d) resampling the signal (403) of each window (407) by multiplying a number of original data points of each window by the resampling indicator,
e) generating a resampled overall signal (419) by joining resampled signals of each window,
f) comparing (421) the resampled overall signal (419) with a reference signal, and
g) outputting (423) a failure report in case the resampled overall signal (419) differs from the reference signal.

13. A computer program product having computer program logic arranged to put into effect the method (400) for detecting a state of a rotating machine that is operated under various rotational speeds according to claim 12, when being executed by a computer system.

**Patentansprüche**

1. Diagnosevorrichtung (200) zum Analysieren des Zustands einer rotierenden Maschine, die unter verschiedenen Drehzahlen betrieben wird,

wobei die Diagnosevorrichtung (200) Folgendes umfasst:

- eine Messeinheit (201), und
- eine Steuereinheit (203),

wobei die Messeinheit (201) konfiguriert ist, ein Signal (403) zu bestimmen, das eine Frequenz aufweist, die sich bezüglich der Drehzahl der rotierenden Maschine ändert,
wobei die Steuereinheit (203) konfiguriert ist, das Signal (403), das durch die Messeinheit (201) bestimmt worden ist, zu analysieren,
wobei das Analysieren des Signals (403) Folgendes umfasst:

- Aufteilen des Signals (403) in mehrere Fenster (407),
- Extrahieren eines Neuabtastungsindikators (411) aus dem Signal (403) für jedes Fenster (407), wobei die Messeinheit ein Vibrationssensor oder ein Stromsensor ist und wobei in dem Fall, in dem die Messeinheit (201) ein Stromsensor ist, der Neuabtastungsindikator (411) ein Verhältnis von einem maximalen Frequenzwert einer vorgegebenen N-ten Harmonischen über allen Fenstern und einem Frequenzwert der vorgegebenen N-ten Harmonischen in dem spezifischen Fenster (407) ist, oder in dem Fall, in dem die Messeinheit (201) ein Vibrationssensor ist, der Neuabtastungsindikator (411) ein Verhältnis von einem maximalen Frequenzwert einer vorgegebenen Frequenzkomponente über allen Fenstern und einem Frequenzwert der vorgegebenen Frequenzkomponente in einem spezifischen Fenster (407) ist,
- Neuabtasten des Signals (403) für jedes Fenster (407) durch Multiplizieren einer Zahl von ursprünglichen Datenpunkten jedes Fensters (407) mit dem Neuabtastungsindikator (411),
- Erzeugen eines neu abgetasteten Gesamtsignals (419) durch Verbinden der neu abgetasteten Signale (415) jedes Fensters.

2. Diagnosevorrichtung (200) nach Anspruch 1, wobei die Steuereinheit (203) ferner konfiguriert ist, das neu abgetastete Gesamtsignal (419) mit einem Referenzsignal zu vergleichen und einen Fehlerbericht auszugeben, falls das neu abgetastete Gesamtsignal (419) von dem Referenzsignal abweicht.

3. Diagnosevorrichtung (200) nach Anspruch 1, wobei in dem Fall, in dem die Messeinheit (201) ein Vibrationssensor ist, die vorgegebene Frequenzkomponente eine Frequenz eines Zahneingriffs, der an die rotierende Maschine gekoppelt ist, enthält.

4. Diagnosevorrichtung (200) nach Anspruch 1, wobei in dem Fall, in dem die Messeinheit (201) ein Vibrationssensor ist, die vorgegebene Frequenzkomponente eine Betriebsfrequenz der rotierenden Maschine ausschließt.

5. Diagnosevorrichtung (200) nach mindestens einem der vorhergehenden Ansprüche, wobei eine Größe eines spezifischen Fensters (407) der mehreren Fenster einer Zeit entspricht, die vorgegeben ist oder die bezüglich einer Drehzahl der rotierenden Maschine dynamisch angepasst wird.

6. Diagnosevorrichtung (200) nach Anspruch 5, wobei die dynamische Anpassung der Größe eines Fensters durch einen trainierten Algorithmus für maschinelles Lernen oder eine trainierte künstliche Intelligenz durchgeführt wird.

7. Diagnosevorrichtung (200) nach mindestens einem der vorhergehenden Ansprüche, wobei die Steuereinheit konfiguriert ist, Datenpunkte an einem Rand eines Fensters oder zwischen zwei Fenstern zu interpolieren oder zu extrapolieren.

8. Diagnosevorrichtung (200) nach mindestens einem der vorhergehenden Ansprüche, wobei das neu abgetastete Gesamtsignal (419) unter Verwendung eines trainierten Algorithmus für maschinelles Lernen oder einer trainierten künstlichen Intelligenz mit einem Referenzsignal verglichen wird.

9. Diagnosevorrichtung (200) nach mindestens einem der vorhergehenden Ansprüche, wobei eine Ordnungsanalyse auf das neu abgetastete Gesamtsignal (419) angewendet wird und das resultierende Ordnungsspektrum mit einem Referenzsignal verglichen wird.

10. Diagnosevorrichtung (200) nach mindestens einem der vorhergehenden Ansprüche, wobei das Verhältnis der mehreren Frequenzen in dem Signal (403) durch Dividieren, Multiplizieren, Subtrahieren und/oder Addieren spezifischer Frequenzen der mehreren Frequenzen berechnet wird.

11. Diagnosevorrichtung (200) nach mindestens einem der vorhergehenden Ansprüche, wobei die rotierende Maschine eine elektrische Maschine ist, die aus der folgenden, nicht erschöpfenden Liste von elektrischen Maschinen ausgewählt wird: Generator einer Windturbine, Motor eines Fahrzeugs, Motor eines Straßenfahrzeugs, Motor eines Zugs, Motor einen Aufzugs, Motor einer beliebigen anderen industriellen Vorrichtung, vorzugsweise ein Elektromotor.

12. Computer-implementiertes Diagnoseverfahren (400) zum Detektieren eines Zustands einer rotierenden Maschine, die mit verschiedenen Drehzahlen betrieben wird, wobei das Verfahren (400) Folgendes umfasst:

a) Bestimmen (401) eines Signals (403), das eine Frequenz aufweist, die sich bezüglich der Drehzahl der rotierenden Maschine ändert, durch eine Messeinheit (201),
b) Aufteilen (405) des Signals (403) in mehrere Fenster (407),
c) Extrahieren eines Neuabtastungsindikators aus dem Signal (403) für jedes Fenster, wobei die Messeinheit ein Vibrationssensor oder ein Stromsensor ist und wobei in dem Fall, in dem die Messeinheit (201) ein Stromsensor ist, der Neuabtastungsindikator (411) ein Verhältnis von einem maximalen Frequenzwert einer vorgegebenen N-ten Harmonischen über allen Fenstern und einem Frequenzwert der vorgegebenen N-ten Harmonischen in dem spezifischen Fenster (407) ist, oder in dem Fall, in dem die Messeinheit (201) ein Vibrationssensor ist, der Neuabtastungsindikator (411) ein Verhältnis von einem maximalen Frequenzwert einer vorgegebenen Frequenzkomponente über allen Fenstern und einem Frequenzwert der vorgegebenen Frequenzkomponente in einem spezifischen Fenster (407) ist,
d) Neuabtasten des Signals (403) jedes Fensters (407) durch Multiplizieren einer Zahl von ursprünglichen Datenpunkten jedes Fensters mit dem Neuabtastungsindikator,
e) Erzeugen eines neu abgetasteten Gesamtsignals (419) durch Verbinden der neu abgetasteten Signale jedes Fensters,
f) Vergleichen (421) des neu abgetasteten Gesamtsignals (419) mit einem Referenzsignal, und
g) Ausgeben (423) eines Fehlerberichts, falls das neu abgetastete Signal (419) von dem Referenzsignal abweicht.

13. Computerprogrammprodukt, das eine Computerprogrammlogik aufweist, die angeordnet ist, um das Verfahren (400) zum Detektieren eines Zustands einer rotierenden Maschine, die unter verschiedenen Drehzahlen betrieben wird, nach Anspruch 12 zu verwirklichen, wenn sie durch ein Computersystem ausgeführt wird.

**Revendications**

1. Dispositif de diagnostic (200) destiné à analyser un état d'une machine rotative qui est actionnée à diverses vitesses de rotation,

dans lequel le dispositif de diagnostic (200) comprend :

- une unité de mesurage (201), et
- une unité de commande (203),

dans lequel l'unité de mesurage (201) est configurée pour déterminer un signal (403) ayant une fréquence qui change par rapport à la vitesse de rotation de la machine rotative,
dans lequel l'unité de commande (203) est configurée pour analyser le signal (403) déterminé par l'unité de mesurage (201),
dans lequel l'analyse du signal (403) comprend de :

- diviser le signal (403) en une pluralité de fenêtres (407),
- extraire un indicateur de ré-échantillonnage (411) à partir du signal (403) pour chaque fenêtre (407), dans lequel l'unité de mesurage est un capteur de vibrations ou un capteur de courant et dans lequel, dans le cas où l'unité de mesurage (201) est un capteur de courant, l'indicateur de ré-échantillonnage (411) est un rapport d'une valeur de fréquence maximum d'une N-ième harmonique prédéterminée sur toutes les fenêtres, et d'une valeur de fréquence de la N-ième harmonique prédéterminée dans la fenêtre particulière (407)

ou,
dans le cas où l'unité de mesurage (201) est un capteur de vibrations, l'indicateur de ré-échantillonnage (411) est un rapport d'une valeur de fréquence maximum d'une composante de fréquence prédéterminée sur toutes les fenêtres et d'une valeur de fréquence de la composante de fréquence prédéterminée dans une fenêtre particulière (407),

- ré-échantillonner le signal (403) pour chaque fenêtre (407) en multipliant un nombre de points de données d'origine de chaque fenêtre (407) par l'indicateur de ré-échantillonnage (411),
- générer un signal global ré-échantillonné (419) en réunissant des signaux ré-échantillonnés (415) de chaque fenêtre.

2. Dispositif de diagnostic (200) selon la revendication 1,
dans lequel l'unité de commande (203) est en outre configurée pour comparer le signal global ré-échantillonné (419) à un signal de référence et pour sortir un rapport de défaillance dans le cas où le signal global ré-échantillonné (419) diffère du signal de référence.

3. Dispositif de diagnostic (200) selon la revendication 1,
dans lequel, dans le cas où l'unité de mesurage (201) est un capteur de vibrations, la composante de fréquence prédéterminée inclut une fréquence d'un engrènement d'engrenages couplé à la machine rotative.

4. Dispositif de diagnostic (200) selon la revendication 1,
dans lequel, dans le cas où l'unité de mesurage (201) est un capteur de vibrations, la composante de fréquence prédéterminée exclut une fréquence de fonctionnement de la machine rotative.

5. Dispositif de diagnostic (200) selon l'une au moins des revendications précédentes,
dans lequel une taille d'une fenêtre particulière (407) de la pluralité de fenêtres est une période qui est prédéterminée ou qui est adaptée de manière dynamique par rapport à une vitesse de rotation de la machine rotative.

6. Dispositif de diagnostic (200) selon la revendication 5, dans lequel
l'adaptation dynamique de la taille d'une fenêtre est effectuée par un algorithme d'apprentissage automatique entraîné ou une intelligence artificielle entraînée.

7. Dispositif de diagnostic (200) selon l'une au moins des revendications précédentes,
dans lequel l'unité de commande est configurée pour interpoler ou extrapoler des points de données au niveau d'un bord d'une fenêtre ou entre deux fenêtres est interpolée.

8. Dispositif de diagnostic (200) selon l'une au moins des revendications précédentes,
dans lequel le signal global ré-échantillonné (419) est comparé à un signal de référence en utilisant un algorithme d'apprentissage automatique entraîné ou une intelligence artificielle entraînée.

9. Dispositif de diagnostic (200) selon l'une au moins des revendications précédentes, dans lequel une analyse d'ordre est appliquée au signal global ré-échantillonné (419) et le spectre d'ordre résultant est comparé à un signal de référence.

10. Dispositif de diagnostic (200) selon l'une au moins des revendications précédentes, dans lequel le rapport de la pluralité de fréquences dans le signal (403) est calculé en divisant, multipliant, soustrayant et/ou additionnant des fréquences particulières de la pluralité de fréquences.

11. Dispositif de diagnostic (200) selon l'une au moins des revendications précédentes, dans lequel la machine rotative est une machine électrique sélectionnée parmi la liste non exhaustive suivante de machines électriques : générateur d'une turbine d'éolienne, moteur d'un véhicule, moteur d'une voiture, moteur d'un train, moteur d'un ascenseur, moteur de tout autre appareil industriel, de préférence un moteur électrique.

12. Procédé de diagnostic implémenté par ordinateur (400) pour détecter un état d'une machine rotative qui est actionnée à diverses vitesses de rotation, dans lequel le procédé (400) comprend les étapes consistant à :

    a) déterminer (401), via une unité de mesurage (201), un signal (403) ayant une fréquence qui change par rapport à la vitesse de rotation de la machine rotative,
    b) diviser (405) le signal (403) en une pluralité de fenêtres (407),
    c) extraire un indicateur de ré-échantillonnage à partir du signal (403) pour chaque fenêtre (407), dans lequel l'unité de mesurage est un capteur de vibrations ou un capteur de courant et dans lequel, dans le cas où l'unité de mesurage (201) est un capteur de courant, l'indicateur de ré-échantillonnage (411) est un rapport d'une valeur de fréquence maximum d'une N-ième harmonique prédéterminée sur toutes les fenêtres, et d'une valeur de fréquence de la N-ième harmonique prédéterminée dans la fenêtre particulière (407)
    ou,
    dans le cas où l'unité de mesurage (201) est un capteur de vibrations, l'indicateur de ré-échantillonnage (411) est un rapport d'une valeur de fréquence maximum d'une composante de fréquence prédéterminée sur toutes les fenêtres et d'une valeur de fréquence de la composante de fréquence prédéterminée dans une fenêtre particulière (407),
    d) ré-échantillonner le signal (403) de chaque fenêtre (407) en multipliant un nombre de points de données d'origine de chaque fenêtre par l'indicateur de ré-échantillonnage,
    e) générer un signal global ré-échantillonné (419) en réunissant des signaux ré-échantillonnés de chaque fenêtre,
    f) comparer (421) le signal global ré-échantillonné (419) à un signal de référence, et
    g) sortir (423) un rapport de défaillance dans le cas où le signal global ré-échantillonné (419) diffère du signal de référence.

13. Produit de programme d'ordinateur ayant une logique de programme d'ordinateur agencée pour mettre en œuvre le procédé (400) pour détecter un état d'une machine rotative qui est actionnée à diverses vitesses de rotation selon la revendication 12, quand il est exécuté par un système d'ordinateur.

Fig. 1(a)

Fig. 1(b)

Fig. 1

Fig. 2(a)

Fig. 2(b)

Fig. 2

EP 4 040 135 B1

Fig. 3

Fig. 4(a)

303  305  307  309

301

Fig. 4(c)

300

331

335

Fig. 4(b)

311

321
323
325
329

313
315  317  319

a1

327

a2

Fig. 4(d)

333

1  2  3  4

Fig. 4

EP 4 040 135 B1

Fig. 5

**EP 4 040 135 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018335366 A1